# DEMANDE DE BREVET EUROPEEN

(11) **EP 0 811 543 A1**
(43) Date de publication de la demande: **10.12.1997**
(21) Numéro de dépôt: 97401239.5
(22) Date de dépôt: 03.06.1997
(51) Int. Cl.: B62D 1/18

(54) **Ensemble de colonne de direction réglable au moins en hauteur notamment pour véhicule automobile**

(30) Priorité: 03.06.1996 FR 9606820
(71) Demandeur: ECIA - EQUIPEMENTS ET COMPOSANTS POUR L'INDUSTRIE AUTOMOBILE, F-25400 Audincourt (FR)
(72) Inventeur: Courvoisier, Patrick, 25600 Vieux-Charmont (FR); Bertrand, Jean-Marie, 25700 Mathay (FR)
(74) Mandataire: Habasque, Etienne Joel Jean-François

(57) **Abrégé**

Cet ensemble comportant un corps (2) dans lequel est disposé un arbre (3) dont une extrémité est adaptée pour recevoir le volant (4) et dont l'autre extrémité est adaptée pour être reliée de manière articulée autour d'un premier axe (6), au reste (7) du mécanisme de direction, le corps (2) comportant à l'une de ses extrémités, des moyens d'articulation (8) autour d'un second axe (9), décalé par rapport au premier, sur le reste de la structure du véhicule, et à l'autre de ses extrémités des moyens (11) de blocage en position du corps, déplaçables entre des positions de verrouillage et de déverrouillage, est caractérisé en ce que les moyens d'articulation et les moyens de blocage lorsqu'ils sont en position de déverrouillage, présentent un jeu de montage d'absorption des déplacements du corps par rapport au reste de la structure du véhicule (10) lors de ses réglages en hauteur, dus au décalage entre les premier et second axes.

## Description

La présente invention concerne un ensemble de colonne de direction réglable au moins en hauteur notamment pour véhicule automobile.

On connait déjà dans l'état de la technique, un certain nombre d'ensembles de colonne de direction de ce type, qui comportent un corps de colonne de direction dans lequel est disposé un arbre de direction, dont une extrémité est adaptée pour recevoir le volant de direction du véhicule et dont l'autre extrémité est adaptée pour être reliée de manière articulée autour d'un premier axe, au reste du mécanisme de direction du véhicule.

De plus, le corps comporte à proximité de l'une de ses extrémités, des moyens d'articulation autour d'un second axe, décalé par rapport au premier, sur le reste de la structure du véhicule et à proximité de l'autre de ses extrémités, des moyens de blocage en position angulaire du corps par rapport au reste de la structure du véhicule, déplaçables entre une position de verrouillage, pour le blocage du corps en position et une position de déverrouillage, pour le réglage de sa position angulaire.

Une telle structure, dans laquelle le premier axe d'articulation de l'extrémité correspondante de l'arbre de direction sur le reste du mécanisme de direction du véhicule est décalé par rapport au second axe d'articulation de l'extrémité correspondante du corps de colonne sur le reste de la structure du véhicule, se traduit lors des réglages angulaires en position de ce corps par des déplacements complexes relatifs du corps et du premier axe d'articulation par rapport au reste de la structure du véhicule.

En effet, la position relative de ces différentes pièces change lors de ces réglages en position angulaire du corps.

Pour résoudre ces problèmes, on a déjà proposé dans l'état de la technique, d'utiliser des arbres de direction télescopiques permettant d'absorber ces déplacements.

On a également proposé dans l'état de la technique, d'utiliser des paliers de montage particuliers de l'arbre dans le corps, autorisant un léger déplacement axial de celui-ci dans ce corps pour absorber ces déplacements.

On conçoit cependant que toutes ces structures présentent un certain nombre d'inconvénients, notamment de montage et de coût de réalisation.

Le but de l'invention est donc de résoudre ces problèmes.

A cet effet, l'invention a pour objet un ensemble de colonne de direction réglable au moins en hauteur, notamment pour véhicule automobile, du type comportant un corps de colonne de direction dans lequel est disposé un arbre de direction, dont une extrémité est adaptée pour recevoir le volant de direction du véhicule, et dont l'autre extrémité est adaptée pour être reliée de manière articulée autour d'un premier axe, au reste du mécanisme de direction du véhicule, le corps comportant à proximité de l'une de ses extrémités, des moyens d'articulation autour d'un second axe, décalé par rapport au premier, sur le reste de la structure du véhicule, et à proximité de l'autre de ses extrémités des moyens de blocage en position angulaire du corps par rapport au reste de la structure du véhicule, déplaçables entre une position de verrouillage pour le blocage du corps en position et une position de déverrouillage pour le réglage de sa position angulaire, caractérisé en ce que les moyens d'articulation et les moyens de blocage lorsqu'ils sont en position de déverrouillage, présentent un jeu de montage d'absorption des déplacements du corps par rapport au reste de la structure du véhicule lors de ses réglages en hauteur, dus au décalage entre les premier et second axes d'articulation.

L'invention sera mieux comprise à la lecture de la description qui va suivre, donnée uniquement à titre d'exemple et faite en se référant aux dessins annexés, sur lesquels :
- la Fig.1 représente une vue schématique de côté d'un exemple de réalisation d'un ensemble de colonne de direction selon l'invention;
- la Fig.2 représente une vue schématique de côté d'un mode de réalisation de moyens d'articulation entrant dans la constitution d'un ensemble de colonne de direction selon l'invention; et
- la Fig.3 représente une vue schématique de côté d'un mode de réalisation de moyens de blocage entrant dans la constitution d'un ensemble de colonne de direction selon l'invention.

On reconnaît en effet sur ces figures, un ensemble de colonne de direction réglage au moins en hauteur, notamment pour véhicule automobile, et désigné par la référence générale 1.

Un tel ensemble de colonne comporte généralement un corps de colonne de direction, désigné par la référence générale 2, dans lequel est disposé un arbre de direction, désigné par la référence générale 3, dont une extrémité est adaptée pour recevoir le volant de direction du véhicule désigné par la référence générale 4 sur cette figure.

L'autre extrémité de cet arbre de direction 3 est adaptée pour être reliée, en 5, de manière articulée autour d'un premier axe 6, sur le reste du mécanisme de direction du véhicule, désigné par la référence générale 7 sur cette figure.

Le corps de colonne 2 comporte quant à lui à proximité de l'une de ses extrémités, des moyens 8 d'articulation, autour d'un second axe 9 décalé par rapport au premier 6, sur le reste de la structure du véhicule, désignée par la référence générale 10 sur cette figure et à proximité de l'autre de ses extrémités, des moyens 11 de blocage en position angulaire du corps par rapport au reste de la structure du véhicule 10, déplaçables entre une position de verrouillage pour le blocage du corps en position et une position de déverrouillage pour permettre le réglage de sa position angulaire par exemple par un utilisateur.

Différents modes de réalisation de ces ensembles, ont déjà été décrits dans l'état de la technique.

C'est ainsi par exemple que l'on connaît dans l'état de la technique, différents modes de réalisation des moyens de blocage en position du corps par rapport au reste de la structure.

Ces moyens comprennent généralement un tirant s'étendant entre deux flasques, parallèles et reliés au reste de la structure du véhicule, l'une des extrémités de ce tirant étant associée à des moyens de butée et l'autre extrémité de celui-ci étant associée à des moyens de verrouillage par exemple à came, à genouillère ou autre, déplaçables entre deux positions, par exemple par un utilisateur.

Le tirant est alors relié au corps par exemple par l'intermédiaire d'un organe de montage s'étendant entre les flasques.

En fait, la structure de ces moyens de blocage présente déjà par construction un certain jeu de montage qui sera mis à profit comme cela sera décrit plus en détail par la suite.

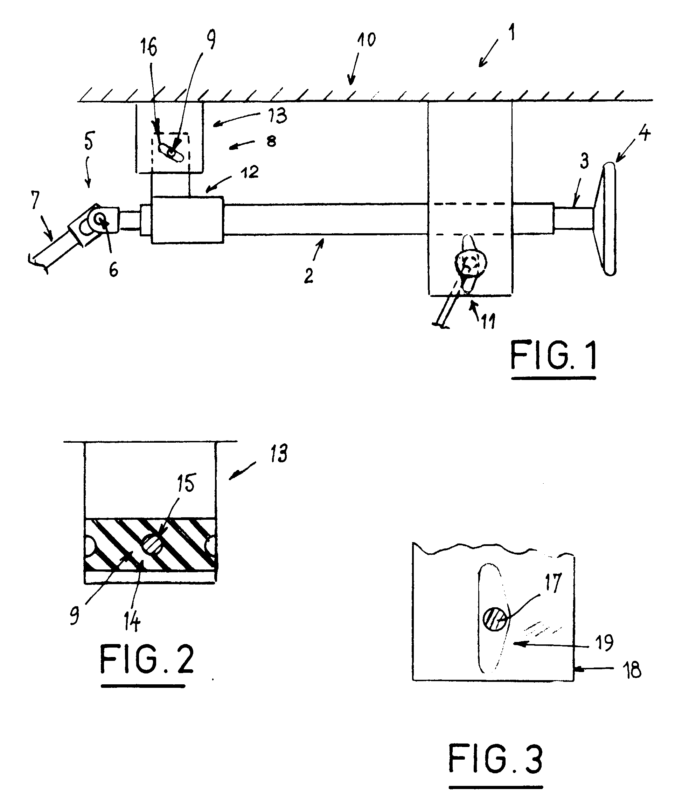

Les moyens d'articulation prévus à l'autre extrémité du corps de colonne 2, comprennent quant à eux par exemple une bride, désignée par la référence générale 12 sur cette figure 1, reliée au corps 2 et montée de manière articulée par exemple dans une chape 13 reliée au reste de la structure du véhicule 10, cette chape et cette bride étant traversées par exemple par une vis délimitant l'axe d'articulation 9 du corps 2 sur le reste de la structure du véhicule 10.

Dans l'ensemble de colonne selon l'invention, les moyens d'articulation 8 de cette extrémité du corps sur le reste de la structure du véhicule, présentent également un jeu de montage d'absorption des déplacements du corps par rapport au reste de la structure du véhicule lors de ses réglages en hauteur, dus au décalage entre les premier et second axes.

En effet, alors que dans les ensembles de colonne de l'état de la technique, l'arbre de direction ou une portion de celui-ci est adapté pour se déplacer afin d'absorber les déplacements de ce corps par rapport au reste de la structure du véhicule lors de ses réglages, en raison du ce décalage entre les premier et second axes, dans l'ensemble de colonne selon l'invention, c'est l'ensemble du corps qui est adapté pour se déplacer par rapport au reste de la structure du véhicule pour absorber ces déplacements, grâce aux jeux de montage des moyens de blocage 11 lorsqu'ils sont en position de déverrouillage et des moyens d'articulation 8.

Le jeu de montage des moyens de blocage et des moyens d'articulation, peut être obtenu en intégrant dans ceux-ci des moyens élastiques de suspension du corps sur le reste de la structure du véhicule.

Ceci est par exemple le cas des moyens d'articulation 8 qui peuvent comporter un palier élastique désigné par la référence générale 14 sur la figure 2, ce palier élastique étant par exemple fixé sur la chape 13 reliée au reste de la structure du véhicule 10 et présentant un trou de passage d'une vis d'articulation 15 de l'extrémité correspondante du corps 2 et plus particulièrement de la bride 12 de celui-ci sur le reste de la structure du véhicule, la chape 13 comportant également des lumières 16 autorisant cette vis et donc la bride et le corps à se déplacer par rapport à la chape lors de la déformation du palier élastique 14 consécutivement au réglage en hauteur du corps de colonne et à son déplacement, par rapport au reste de la structure du véhicule.

Sur la figure 3, on a représenté un exemple de réalisation possible des moyens de blocage 11 de ce corps de colonne sur le reste de la structure du véhicule.

Ces moyens de blocage comprennent par exemple un tirant 17 s'étendant entre des flasques reliés au reste de la structure du véhicule, s'étendant de part et d'autre du corps de colonne 2 et dont l'un est désigné par la référence générale 18 sur cette figure.

Ces flasques comprennent par exemple des lumières de réglage dont l'une est désignée par la référence générale 19, permettant de guider le déplacement du tirant 17 lors des réglages en position angulaire du corps de colonne 2 entre ceux-ci.

Dans ce cas, le jeu de montage de ces moyens de blocage peut être constitué par exemple par un jeu de montage prévu entre le tirant 17 et les bords des lumières des flasques, c'est-à-dire entre les moyens de blocage et le reste de la structure du véhicule.

On conçoit alors que lorsque ces moyens de blocage sont en position de déverrouillage, le corps 2 qui est relié au tirant 17 par un organe de montage, peut également se déplacer par rapport au reste de la structure du véhicule sur une course de déplacement délimitée par le jeu existant entre le tirant et les bords correspondants des lumières des flasques.

Il va de soi bien entendu que d'autres modes de réalisation de ces moyens de blocage et de ces moyens d'articulation peuvent être envisagés.

C'est ainsi par exemple que le jeu de montage des moyens de blocage peut également être prévu entre le tirant 17, c'est-à-dire les moyens de blocage et le corps 2, dans l'organe de montage de celui-ci entre les flasques.

Dans ce cas, le corps et l'organe de montage sont déplaçables par rapport au tirant lors des réglages en position du corps.

De même, les moyens d'articulation peuvent présenter une structure autre que celle décrite, le palier élastique étant par exemple relié à la bride du corps de colonne et non à la chape du reste de la structure du véhicule, les lumières de déplacement de la vis d'articulation étant également prévues dans la bride.

On conçoit alors que dans l'ensemble de colonne selon l'invention, le corps de colonne est en quelque sorte monté flottant par rapport au reste de la structure du véhicule afin d'absorber les déplacements de celui-ci lors de son réglage en hauteur, les moyens de blocage permettant de le bloquer en position lorsqu'ils sont en position de verrouillage.

## Revendications

1. Ensemble de colonne de direction réglable au moins en hauteur, notamment pour véhicule automobile, du type comportant un corps de colonne de direction (2) dans lequel est disposé un arbre de direction (3), dont une extrémité est adaptée pour recevoir le volant de direction (4) du véhicule, et dont l'autre extrémité est adaptée pour être reliée de manière articulée autour d'un premier axe (6), au reste (7) du mécanisme de direction du véhicule, le corps (2) comportant à proximité de l'une de ses extrémités, des moyens d'articulation (8) autour d'un second axe (9), décalé par rapport au premier, sur le reste de la structure du véhicule (10), et à proximité de l'autre de ses extrémités, des moyens (11) de blocage en position angulaire du corps par rapport au reste de la structure du véhicule, déplaçables entre une position de verrouillage pour le blocage du corps en position et une position de déverrouillage pour le réglage de sa position angulaire, caractérisé en ce que les moyens d'articulation (8) et les moyens de blocage (11) lorsqu'ils sont en position de déverrouillage, présentent un jeu de montage d'absorption des déplacements du corps (2) par rapport au reste de la structure du véhicule (10), lors de ses réglages en hauteur, dus au décalage entre les premier et second axes d'articulation (6,9).

2. Ensemble selon la revendication 1, caractérisé en ce que le jeu de montage des moyens de blocage (11) est prévu entre ceux-ci et le corps de colonne (2) et/ou le reste de la structure du véhicule (10)

3. Ensemble selon l'une quelconque des revendications précédentes, caractérisé en ce que le jeu de montage des moyens d'articulation est délimité par un palier élastique (14) de raccordement du corps de colonne ou reste de la structure du véhicule (10).

4. Ensemble selon la revendication 3, caractérisé en ce que le palier élastique (14) est fixé sur l'un des éléments, reste de la structure du véhicule ou corps, et est adapté pour recevoir une vis d'articulation (15) reliée à l'autre élément, corps de colonne ou reste de la structure du véhicule.
